# EUROPEAN PATENT APPLICATION

(11) **EP 4 769 915 A1**
(43) Date of publication of application: **01.07.2026**
(21) Application number: 25224631.9
(22) Date of filing: 17.12.2025
(51) Int. Cl.: H02K 15/043

(54) **STATOR WAVE-WOUND WIRE FORMING PROCESS AND DEVICE**

(30) Priority: 25.12.2024 CN 202411930833
(71) Applicant: UPTEC Intelligent Manufacturing (Wuxi) Co., Ltd., Wuxi City 214000 (CN)
(72) Inventor: YE, Xin, Wuxi City, Jiangsu Province (CN)
(74) Representative: Faggioni, Carlo Maria

(57) **Abstract**

A stator wave-wound wire forming process and device are disclosed. The forming process includes sequential steps of 2D forming, 3D preforming, and 3D stamping and forming. A device used in the process includes a 2D forming device, a 3D preforming device, and a 3D stamping and forming device. After a 2D wave-wound wire is processed into a ring or coil shape, an overall structure of a winding becomes more stable, which facilitates a subsequent stamping operation and prevents winding scattering or misalignment. The 2D wave-wound wire is processed into the coil shape, such that wires can be distributed more evenly and packing density thereof can be adjusted, helping optimize utilization of stator slots, thereby enhancing the power density and efficiency of a motor. Once the 2D wave-wound wire is formed into the coil shape, a coil forms a closed integral structure, which can more precisely maintain a winding position during stamping and reduce a risk of deformation and misalignment.

## Description

### FIELD OF TECHNOLOGY

The present invention belongs to the field of a wave-wound wire forming device and specifically relates to a stator wave-wound wire forming process and device.

### BACKGOUND

In many manufacturing processes, 3D wave-wound wire forming technology is typically direct three-dimensional forming, that is, in slots or winding space of the stator, wires are directly arranged into a three-dimensional spatial structure along a wave trajectory.

However, for specific stator designs (such as slotless windings or stators with special shapes), 3D stamping and forming are directly performed on the stator wave-wound wires, so the requirements of the specific stator shape cannot be met.

Therefore, a method is adopted in which the wave-wound wires are formed into a complex shape through 2D forming and then subjected to 3D stamping, to meet the manufacturing requirements of specific stators. However, this approach introduces a new problem:
After the 2D wave-wound wires are processed, the wires are relatively loose and prone to deformation. Direct use of the wires in 3D forming leads to uncontrolled winding shapes, affecting motor performance.

Therefore, there is a need for a process and device that can ensure that, on the premise of meeting the requirements that the stator wave-wound wires are formed into a specific shape through 2D forming, the stator wave-wound wires formed by 2D forming do not deform after being subjected to 3D stamping and forming.

### SUMMARY OF THE INVENTION

To address the above shortcomings, the present invention provides a stator wave-wound wire forming process, and the process includes the following steps:
S1: placing a single straight wave-wound wire in a 2D forming device, and simultaneously pressing against two sides of the straight wave-wound wire to implement one-step forming of a 2D wave-wound wire;
S2: pre-winding the 2D wave-wound wire in a 3D preforming device to form a wave-wound sleeve after 2D forming;
S3: sleeving the wave-wound sleeve onto a 3D stamping and forming device, and stamping upper and lower ends of an adjusted single pre-wound 2D wave-wound wire to form a final wave-wound wire; and
S4: repeating steps S1-S3 to form required wave-wound wires, and then individually placing these wires into a winding machine one by one to produce a stator coil.

Furthermore, the pre-winding treatment includes the following steps:
S2-1: conveying a planar 2D wave-wound wire formed by the 2D forming device to the 3D preforming device for preforming preparation;
S2-2: sequentially winding bent ends of the planar 2D wave-wound wire onto a surface of the 3D preforming device; and
S2-3: completely winding the planar 2D wave-wound wire onto the surface of the 3D preforming device to form the wave-wound sleeve.

The present invention further discloses a stator wave-wound wire forming device applied to the stator wave-wound wire forming process, and the device includes a 2D forming device, a 3D preforming device, and a 3D stamping and forming device that are sequentially installed on a same workbench;
the 2D forming device includes a moving mechanism installed on the top of the workbench, a forming mechanism and a movable end forming and folding mechanism that are installed on the top of the moving mechanism and driven by the moving mechanism, and a fixed end forming and folding mechanism installed on the top of the workbench and used for cooperating with the forming mechanism to fix a wave-wound wire;
the 3D preforming device includes an adjustment and lifting mechanism and a pre-winding mechanism that are installed on the top of the workbench; and
the 3D stamping and forming device includes a support assembly installed on the top of the workbench and a stamping assembly surrounding an exterior of the support assembly.

Furthermore, the forming mechanism is configured to stamp ends of the wave-wound wire, and the movable end forming and folding mechanism is configured to bend a straight wire into the wave-wound wire.

Furthermore, the adjustment and lifting mechanism is configured to convey the 2D-formed wave-wound wire to a bottom of the pre-winding mechanism, and the pre-winding mechanism is configured to pre-wind the 2D-formed wave-wound wire.

Furthermore, the support assembly is configured to sleeve the pre-wound wave-wound sleeve, and the stamping assembly is configured to stamp and form the wave-wound sleeve positioned at a stamping die fixed onto an outer ring of the support assembly.

Compared with the prior art, the present invention has the following beneficial effects:
1. Providing a stable winding structure: pre-winding treatment improves the stability of the winding and reduces the risk of direct stamping.
2. Optimizing winding performance: the filling density, mechanical strength, and heat dissipation performance of the winding can be enhanced through combination of ringshaped preforming and stamping and forming.
3. Meeting complex requirements: the stepwise process is more flexible and suitable for complex stator designs and three-dimensional geometric shapes.
4. Improving production feasibility: the multi-step process reduces errors and enhances consistency and efficiency in motor production.
5. After a 2D wave-wound wire is processed into a ring or coil shape, an overall structure of a winding becomes more stable, which facilitates a subsequent stamping operation and prevents winding scattering or misalignment. The 2D wave-wound wire is processed into the coil shape, such that wires can be distributed more evenly and packing density thereof can be adjusted, helping optimize utilization of stator slots, thereby enhancing the power density and efficiency of a motor. Once the 2D wave-wound wire is formed into the coil shape, a coil forms a closed integral structure, which can more precisely maintain a winding position during stamping and reduce a risk of deformation and misalignment.

### BRIEF DESCRIPTION OF THE DRAWINGS

FIG. 1 is a schematic diagram of a 2D wave-wound wire according to the present invention.
FIG. 2 is a schematic diagram of a pre-wound wave-wound wire according to the present invention.
FIG. 3 is a schematic diagram of a final wave-wound wire according to the present invention.
FIG. 4 is a perspective schematic diagram of a 2D forming device in operation according to the present invention.
FIG. 5 is a perspective schematic diagram of a 3D preforming device in operation according to the present invention.
FIG. 6 is a perspective schematic diagram of a 3D stamping and forming device in operation according to the present invention.
FIG. 7 is a perspective schematic diagram of a 2D forming device after operation.
FIG. 8 is a perspective schematic diagram of a 3D preforming device after operation.
FIG. 9 is a perspective schematic diagram of a 3D stamping and forming device after operation.

### DESCRIPTION OF THE EMBODIMENTS

To facilitate understanding of the present invention, the device of the present invention will be described more comprehensively below with reference to relevant drawings. Embodiments of the device are provided in the accompanying drawings. However, the device can be implemented in many different forms and is not limited to the embodiments described herein. On the contrary, the purpose of providing these embodiments is to make the disclosures of the present invention more thorough and comprehensive.

In the description of the present invention, it should be noted that unless otherwise specified and defined explicitly, the terms "mount," "connect," and "arrange" should be understood in their general senses. For example, they may refer to a fixed connection and arrangement, and may refer to a detachable connection or arrangement, or an integral connection and arrangement. For those skilled in the art, the specific meanings of the above terms in the present invention can be understood according to the specific circumstances.
In the drawings the following reference numbers are consistently used: 11, 2D forming device; 22, 3D preforming device; 33, 3D stamping and forming device; 2, moving mechanism; 3, forming mechanism; 4, movable end forming and folding mechanism; 5, fixed end forming and folding mechanism; 6, adjustment and lifting mechanism; 7, pre-winding mechanism; 8, support assembly; 9, stamping assembly.

### Embodiments

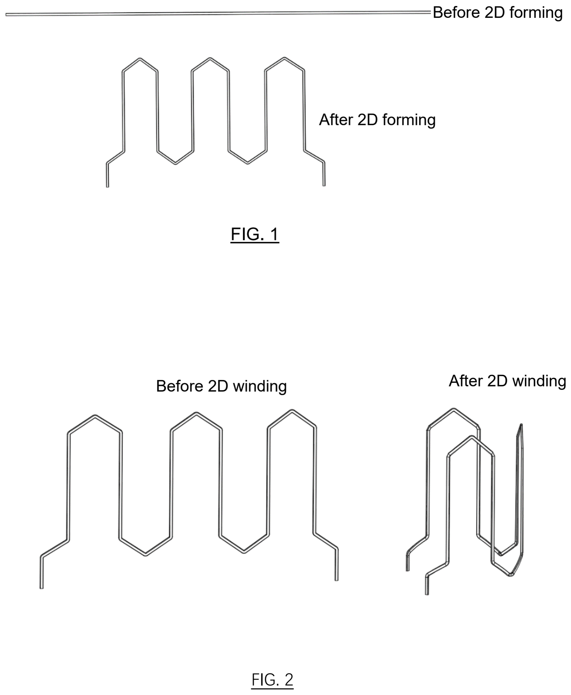

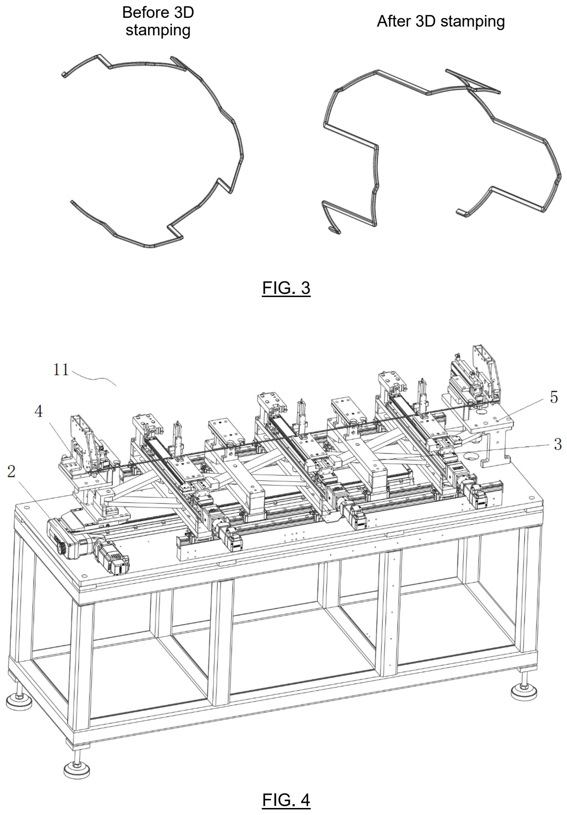

As shown in FIG. 1 to FIG. 3, the exemplary embodiment provides a stator wave-wound wire forming process, and the process includes the following steps:
S1: placing a single straight wave-wound wire in a 2D forming device 11, and simultaneously pressing against two sides of the straight wave-wound wire to implement one-step forming of a 2D wave-wound wire, as shown in FIG. 1;
S2: pre-winding the 2D wave-wound wire in a 3D preforming device 22;
S3: sleeving the wave-wound sleeve onto a 3D stamping and forming device 33, and stamping upper and lower ends of an adjusted single pre-wound 2D wave-wound wire to form a final wave-wound wire, as shown in FIG. 3; and
S4: repeating steps S1-S3 to form required wave-wound wires, and then individually placing these wires into a winding machine one by one to produce a stator coil.

Preferably, step S2 is made according to the following sub-steps:
S2-1: conveying a planar 2D wave-wound wire formed by the 2D forming device to the 3D preforming device 22 for preforming preparation;
S2-2: sequentially winding bent ends of the planar 2D wave-wound wire onto a surface of the 3D preforming device 22; and
S2-3: completely winding the planar 2D wave-wound wire onto the surface of the 3D preforming device 22 to form the wave-wound sleeve, as shown in FIG. 2;

The device used in the above process specifically includes a 2D forming device 11, a 3D preforming device 22, and a 3D stamping and forming device 33 that are sequentially installed on a same workbench.

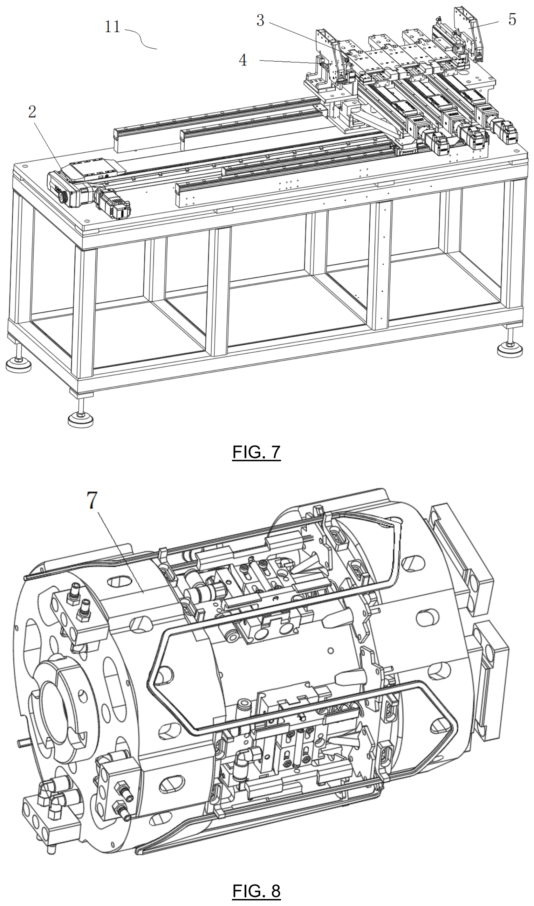

As shown in FIG. 4 and FIG. 7, the 2D forming device 11 includes a moving mechanism 2 installed on the top of the workbench, a forming mechanism 3 and a movable end forming and folding mechanism 4 that are installed on the top of the moving mechanism 2 and driven by the moving mechanism 2, and a fixed end forming and folding mechanism 5 installed on the top of the workbench and used for cooperating with the forming mechanism 3 to fix a wave-wound wire. Specifically, the forming mechanism 3 is configured to stamp ends of the wave-wound wire, and the movable end forming and folding mechanism 4 is configured to drive the wave-wound wire at the stamped ends via the moving mechanism 2 to gradually approach the fixed end forming and folding mechanism 5 to move, thereby pushing the straight wave-wound wire to be folded into a bent wave-wound wire.

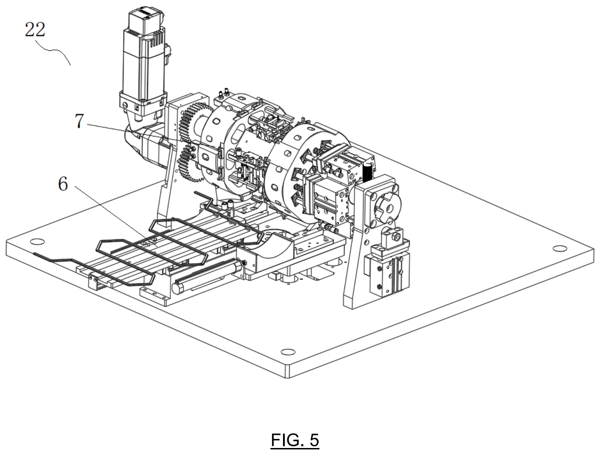

As shown in FIG. 5 and FIG. 8, the 3D preforming device 22 includes an adjustment and lifting mechanism 6 and a pre-winding mechanism 7 that are installed on the top of the workbench. Specifically, the adjustment and lifting mechanism 6 is configured to convey the 2D-formed bent wave-wound wire to a bottom of the pre-winding mechanism 7. As the pre-winding mechanism 7 is rotated, the wave-wound wires at the bottom are hooked and wound to form a wave-wound sleeve, thereby implementing pre-winding treatment on the 2D-formed bent wave-wound wire.

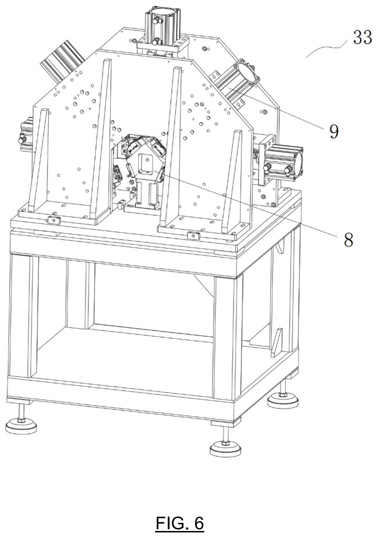

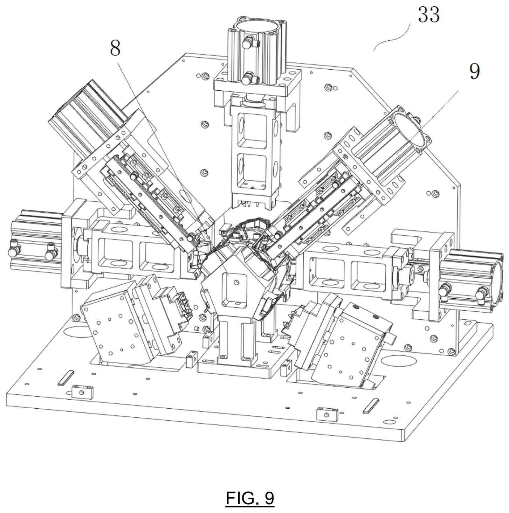

As shown in FIG. 6 and FIG. 9, the 3D stamping and forming device 33 includes a support assembly 8 installed on the top of the workbench and a stamping assembly 9 surrounding an exterior of the support assembly 8. Specifically, the pre-wound wave-wound sleeve is sleeved outside the support assembly 8, and the stamping assembly 9 is configured to stamp and form the wave-wound sleeve positioned at a stamping die fixed onto an outer ring of the support assembly 8 to obtain the final wave-wound wire. It should be noted that the stamping assembly 9 is in one-to-one correspondence with the stamping die (such as stamping assemblies 9 and stamping dies provided in different shapes, angles, and positions).

It should be noted that the structure described in the present invention can be implemented in various forms and is not limited to the embodiments described herein.

Any equivalent transformation made by those skilled in the art based on the content of this specification and accompanying drawings, direct or indirect applications in other related technical fields, such as loading and unloading of other items, should fall within the scope of patent protection of the present invention as defined in the appended claims.

## Claims

1. A stator wave-wound wire forming process, comprising the following steps:
S1: placing a single straight wave-wound wire in a 2D forming device (11), and simultaneously pressing against two sides of the straight wave-wound wire to implement one-step forming of a 2D wave-wound wire;
S2: pre-winding the 2D wave-wound wire in a 3D preforming device (22) to form a wave-wound sleeve after 2D forming;
S3: sleeving the wave-wound sleeve onto a 3D stamping and forming device (33), and stamping upper and lower ends of an adjusted single pre-wound 2D wave-wound wire to form a final wave-wound wire; and
S4: repeating steps S1-S3 to form required wave-wound wires, and then individually placing these wires into a winding machine one by one to produce a stator coil.

2. The stator wave-wound wire forming process according to claim 1, wherein the pre-winding treatment comprises the following steps:
S2-1: conveying a planar 2D wave-wound wire formed by the 2D forming device to the 3D preforming device (22) for preforming preparation;
S2-2: sequentially winding bent ends of the planar 2D wave-wound wire onto a surface of the 3D preforming device (22); and
S2-3: completely winding the planar 2D wave-wound wire onto the surface of the 3D preforming device (22) to form the wave-wound sleeve.

3. A stator wave-wound wire forming device, applied to the stator wave-wound wire forming process according to claims 1 to 2, comprising a 2D forming device (11), a 3D preforming device (22), and a 3D stamping and forming device (33) that are sequentially installed on a same workbench, wherein
the 2D forming device (11) comprises a moving mechanism (2) installed on the top of the workbench, a forming mechanism (3) and a movable end forming and folding mechanism (4) that are installed on the top of the moving mechanism (2) and driven by the moving mechanism (2), and a fixed end forming and folding mechanism (5) installed on the top of the workbench and used for cooperating with the forming mechanism (3) to fix a wave-wound wire;
the 3D preforming device (22) comprises an adjustment and lifting mechanism (6) and a pre-winding mechanism (7) that are installed on the top of the workbench; and
the 3D stamping and forming device (33) comprises a support assembly (8) installed on the top of the workbench and a stamping assembly (9) surrounding an exterior of the support assembly (8).

4. The stator wave-wound wire forming device according to claim 3, wherein the forming mechanism (3) is configured to stamp ends of the wave-wound wire, and the movable end forming and folding mechanism (4) is configured to bend a straight wire into the wave-wound wire.

5. The stator wave-wound wire forming device according to claim 3, wherein the adjustment and lifting mechanism (6) is configured to convey the 2D-formed wave-wound wire to a bottom of the pre-winding mechanism (7), and the pre-winding mechanism (7) is configured to pre-wind the 2D-formed wave-wound wire.

6. The stator wave-wound wire forming device according to claim 3, wherein the support assembly (8) is configured to sleeve the pre-wound wave-wound sleeve, and the stamping assembly (9) is configured to stamp and form the wave-wound sleeve positioned at a stamping die fixed onto an outer ring of the support assembly (8).
